**Europäisches Patentamt**

**European Patent Office**

**Office européen des brevets**

(11) Veröffentlichungsnummer: **0 071 011**

**A1**

(12) **EUROPÄISCHE PATENTANMELDUNG**

(21) Anmeldenummer: **82105262.8**

(22) Anmeldetag: **16.06.82**

(51) Int. Cl.$^3$: **B 60 N 1/06**

(30) Priorität: **31.07.81 DE 3130313**

(43) Veröffentlichungstag der Anmeldung:
**09.02.83 Patentblatt 83/6**

(84) Benannte Vertragsstaaten:
**DE FR GB IT**

(71) Anmelder: **Keiper Automobiltechnik GmbH. & Co. KG**
**Postfach 14 03 80 Büchelstrasse 54-58**
**D-5630 Remscheid 14(DE)**

(72) Erfinder: **Wilking, Hans**
**Zur Acht 5**
**D-6759 Rotselberg(DE)**

(72) Erfinder: **Heinrich, Kurt**
**Erlenberg, 17**
**D-6760 Rockenhausen(DE)**

(72) Erfinder: **Peetz, Walter**
**Konrad-Adenauer-Strasse 11**
**D-6551 Hackenheim(DE)**

(74) Vertreter: **Buse, Karl Georg, Dipl.-Phys. et al,**
**Patentanwälte Dipl.-Phys. Buse Dipl.-Phys. Mentzel**
**Dipl.-Ing. Ludewig Unterdörnen 114**
**D-5600 Wuppertal 2(DE)**

(54) **Drehgelenk, insbesondere für Sitze mit verstellbarer Rückenlehne.**

(57) Bei einem Drehgelenk, insbesondere für Sitze mit verstellbarer Rückenlehne, ist eine die Lage beider Gelenkteile zueinander bestimmende, als Getriebe mit wenigstens einem Innenzahnrad 14 und wenigstens einem damit kämmenden Stirnzahnrad 22 ausgebildete Ver- und Feststelleinrichtung vorgesehen, die einen auf der Schwenkachse 12 angeordneten, mit dieser zusammen drehbaren Exzenter 27 aufweis sowohl das Stirnzahnrad als auch das Innenzahnrad sind als mit den Gelenkteilen 10, 11 drehfest verbundene Topfscheiben 14, 22 ausgebildet. Die das Stirnzahnrad bildende Topfscheibe 22 weist an ihrem Außenmantel eine Außenverzahnung 24 auf, während die das Innenzahnrad bildende Topfscheibe 14 an ihrem Innenmantel mit einer Innenverzahnung 16 versehen ist.

FIG.3

EP 0 071 011 A1

Croydon Printing Company Ltd.

-1-

Drehgelenk, insbesondere für Sitze mit verstellbarer
Rückenlehne

---

Die Erfindung betrifft ein Drehgelenk, insbesondere für
Sitze mit verstellbarer Rückenlehne, bei dem zwei gegeneinander bewegbare Gelenkteile über eine Schwenkachse miteinander verbunden sind und wenigstens eines der Gelenkteile in den Seitenholm eines Rückenlehnenrahmens bzw.
eines Sitzteilrahmens integriert ist, wobei eine die Lage
beider Gelenkteile zueinander bestimmende, als Getriebe
mit wenigstens einem Innenzahnrad und wenigstens einem
damit kämmenden Stirnzahnrad ausgebildete Ver- und Feststelleinrichtung vorgesehen ist, die einen auf der Schwenkachse angeordneten, drehbaren Exzenter aufweist.

Bei einem aus dem DE-GM 78 30 544 bekannten Drehgelenk
sind die der Rückenlehne zugeordneten Gelenkteile über
einen Rahmenbügel miteinander verbunden, der entweder unmittelbar auf einem Schwenkachsenabschnitt gelagert oder
aber mit einem Lagerschild fest verbunden ist, das sich
seinerseits auf einem Schwenkachsenabschnitt abstützt. Das mit dem Rahmenbügel der Rückenlehne und mit dem Sitzteil verbindbare Drehgelenk weist Gelenkteile auf, deren Stärke abhängig von der aus Festigkeitsgründen erforderlichen Zahnbreite der Außenverzahnung des Stirnrades und der Innenverzahnung des Innenzahnkranzes ist. Dabei ist sowohl die Außenverzahnung des Stirnrades als auch die Innenverzahnung des Innenzahnkranzes durch je eine Ausdrückung aus den Gelenkteilen gebildet. Dadurch vergrößert sich die erforderliche Materialstärke der Drehgelenkteile um die Stärke des Verbindungssteges zwischen der ausgedrückten zentrischen Scheibe und dem diese umgebenden Kranz. Der Materialaufwand für ein solches Drehgelenk, dessen Bauteile in ihren Stärken nach der aus Festigkeitsgründen erforderlichen Zahnbreite sowie dem zur Übertragung des Drehmomentes erforderlichen Verbindungsquerschnitt ausgelegt sein müssen, ist sehr materialaufwendig und erhöht darüber hinaus das Sitzgewicht.

Die Aufgabe der vorliegenden Erfindung besteht darin, ein Drehgelenk der vorgenannten Art zu schaffen, durch welches einerseits die Anforderungen an die Festigkeit voll erfüllt werden und dessen Materialeinsatz andererseits gegenüber bekannten Drehgelenken reduziert ist, ohne daß an die Fertigung besondere Anforderungen zu stellen sind.

Diese Aufgabe ist erfindungsgemäß dadurch gelöst, daß sowohl das Stirnzahnrad als auch das Innenzahnrad als mit den Gelenkteilen drehfest verbundene Topfscheiben ausgebildet sind, wobei die das Stirnrad bildende Topfscheibe an ihrem Außenmantel die Verzahnung und die das Innenzahnrad bildende Topfscheibe an ihrem Innenmantel die Verzahnung aufweist. Derartige in einem Preßvorgang herstellbare Topfscheiben lassen sich mit relativ geringer Wandstärke herstellen, wobei die am Umfang der Topfscheiben angeordneten Verzahnungen im gleichen Arbeitsgang miteingepreßt werden können. Durch derartige aus einem relativ dünnwandigen Blechzuschnitt hergestellte Topfscheiben ist das Gewicht der Getriebeteile des Drehgelenkes gegenüber dem bisher Bekannten wesentlich reduziert.

Um eine Auffederung oder gar ein Verwinden solcher Topfscheiben zu verhindern, sind nach einem vorteilhaften Ausgestaltungsmerkmal der Erfindung die sowohl das Stirnzahnrad als auch das Innenzahnrad bildenden Topfscheiben an ihrem Umfang von Kragenzügen der Gelenkteile umfaßt und die Böden der Topfscheiben können durch eingesetzte Scheiben verstärkt sein.

Da es üblich ist, insbesondere bei Drehgelenken, von denen jeweils zwei einander gegenüberliegende Gelenkteile zu einem Rahmenbügel zusammengefaßt sind, diese Gelenkteile aus dünnwandigen, verpreßten Blechzuschnitten herzustellen, trägt die vorliegende Erfindung dieser Fertigungstechnik insofern Rechnung, als daß es nach einem weiteren Ausgestaltungsmerkmal der Erfindung möglich ist, wenigstens eine der beiden Topfscheiben einstückig an einen der beiden Gelenkteile anzuformen.

Damit jedoch die Flächenpreßung im Bereich der Lagerstellen reduziert werden kann, ohne daß Lagerbüchsen eingesetzt werden, sind nach einem weiteren Ausgestaltungsmerkmal der Erfindung die Topfscheiben mit zu ihren Verzahnungen zentrisch angeformten Bördelhülsen auf den zugehörigen Schwenkachsenabschnitt abgestützt. Dabei lassen sich die Böden der Topfscheiben zur Erhöhung ihrer Stabilität einerseits und zur Verlängerung der Lagerflächen für ihre Bördelhülsen andererseits mit Auswölbungen versehen.

Die Erfindung ist in der Zeichnung beispielsweise dargestellt und wird nachfolgend näher erläutert. Es zeigen:

Fig.1    ein Drehgelenk in einer Seitenansicht, dessen der Rückenlehne zugehöriger Gelenkteil mit dem Gelenkteil auf der gegenüberliegenden Seite zu einem Rückenlehnenrahmen zusammengefaßt sein kann,

Fig.2    das aus Fig.1 ersichtliche Drehgelenk in einem Schnitt nach der Linie II-II von Fig.1,

Fig.3    ein weiteres Ausführungsbeispiel des erfindungsgemäßen Drehgelenkes ebenfalls in einem Längsschnitt analog der Schnittlinie II-II von Fig.1,

Fig.4    ein weiteres Ausführungsbeispiel eines Drehgelenkes ebenfalls in einem Schnitt analog der Fig.3,

Fig.5    ein erfindungsgemäßes Drehgelenk, bei dem die das Stirnrad bildende Topfscheibe an das der Rückenlehne zugeordnete Gelenkteil einstückig angeformt ist.

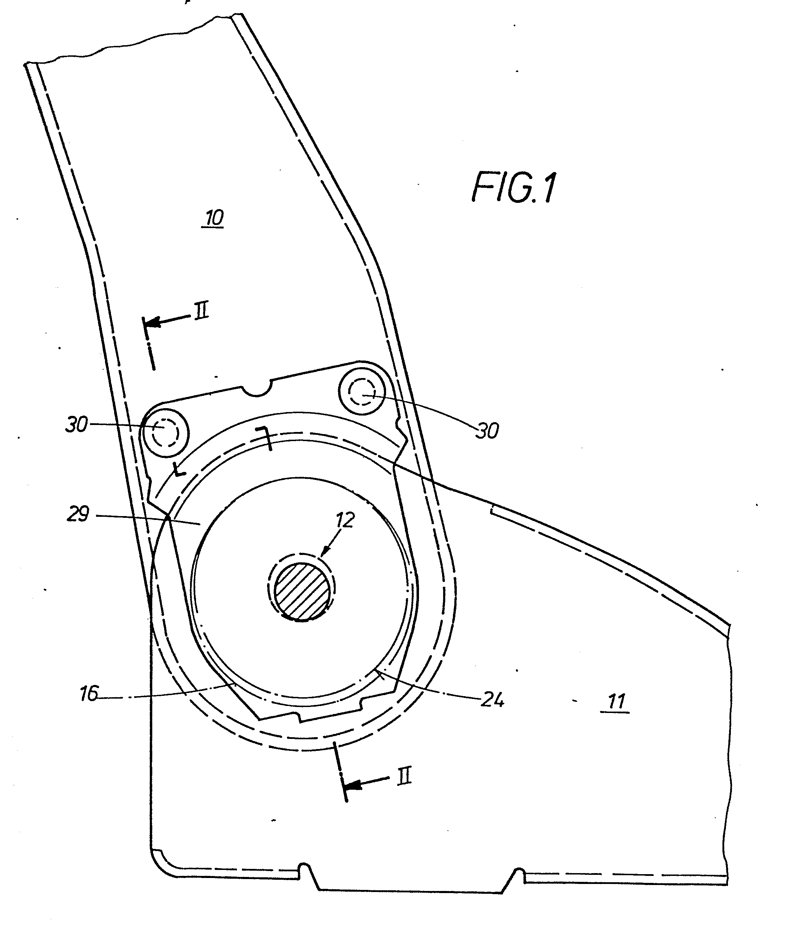

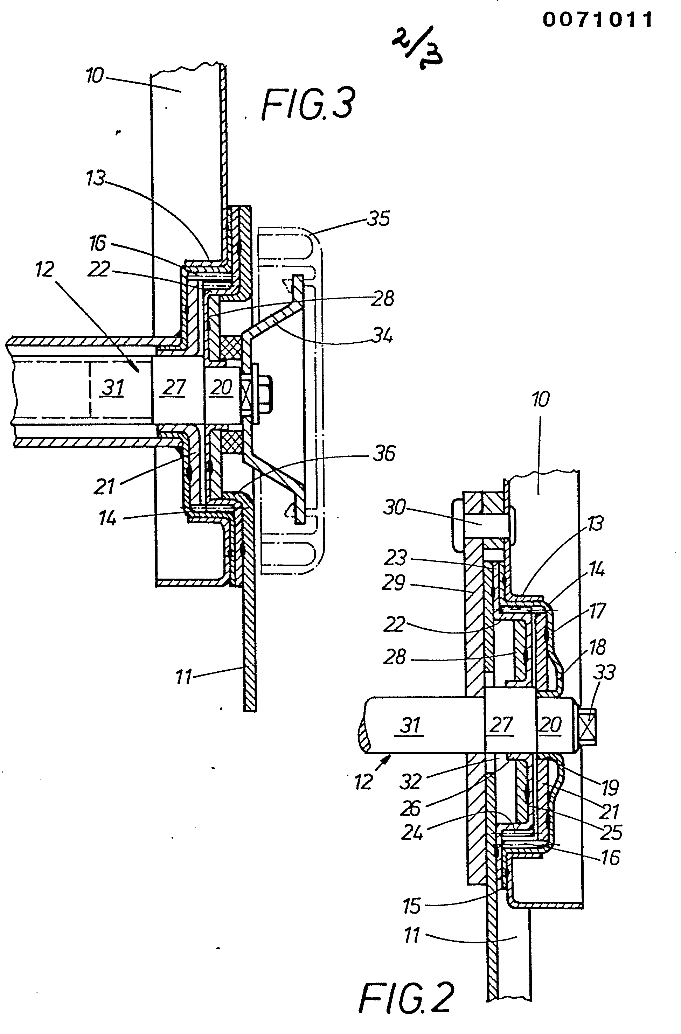

Das aus Fig. 1 ersichtliche Drehgelenk weist einen Gelenkteil 10 auf, der das Schenkelende eines Rückenlehnenrahmens bilden mag. Dieser Gelenkteil 10 ist mit einem dem Sitzteil zugeordneten Gelenkteil 11 über eine Schwenkachse 12 drehgelenkig verbunden. Dabei weist der Gelenkteil 10 in seinem Gelenkaugenbereich einen aufgeweiteten Kragenzug 13 auf, der den Umfang einer Topfscheibe 14 schließend umfaßt, die ihrerseits mit ihrem radialen Kragen 15 beispielsweise durch Punktschweißung mit dem Gelenkteil 10 verbunden ist. In den Innenmantel der Topfscheibe 14 ist eine Innenverzahnung 16 eingepreßt, die vom Kragen 15 bis zum Boden 17 der Topfscheibe 14 reicht. Dieser Boden 17 der Topfscheibe ist mit einer Aufwölbung 18 versehen, an die sich eine zentrisch angeformte Bördelhülse 19 anschließt, die mit ihrem Innenmantel auf einem zentrischen Abschnitt 20 der Schwenkachse 12 gelagert ist. Der Boden 17 der Topfscheibe 14 ist durch eine Scheibe 21 verstärkt, die sich mit ihrem Außenumfang an den Zahnköpfen der Innenverzahnung 16 einerseits und auf der Bördelhülse 19 andererseits abstützt und mit dem Boden 17 der Topfscheibe 14 beispielsweise durch Punktschweißung fest verbunden ist. Mit dem Gelenkteil 11 ist eine weitere Topfscheibe 22 verbunden, indem der Kragen 23 der Topfscheibe 22 mit dem Gelenkteil 11 beispielsweise punktverschweißt ist. Auf dem Außenmantel der Topfscheibe 22 ist eine Außenverzahnung 24 eingepreßt, deren Zähnezahl wenigstens einen Zahn weniger aufweist als die Zähnezahl der Innenverzahnung 16 und deren Kopfkreisdurchmesser um wenigstens eine Zahnhöhe kleiner ist als der Fußkreisdurchmesser der Innenverzahnung 16 der Topfscheibe 14. Auch der Boden 25 der ein Stirnzahnrad dar-stellenden Topfscheibe 22 ist in seinem zentrischen Bereich zu einer Bördelhülse 26 verformt, die auf dem Exzenterabschnitt 27 der Schwenkachse 12 gelagert ist. Mit dem Boden 25 der das Stirnzahnrad bildenden Topfscheibe 22 ist eine Verstärkungsscheibe 28 beispielsweise durch Punktschweißung verbunden, die sich einerseits am die Außenverzahnung 24 aufweisenden Innenmantel und andererseits auf der Bördelhülse 26 der Topfscheibe 22 abstützt. Mit dem Gelenkteil 10 ist ein Lagerschild 29 beispielsweise über Niete 30 verbunden und stützt sich auf einem zentrischen Abschnitt 31 der Schwenkachse 12 drehbar ab. Die Exzentrizität des Exzenterabschnittes 27 ist gegenüber den zentrischen Abschnitten 20 und 31 der Schwenkachse 12 hinsichtlich des Unterschiedes der Wälzkreisdurchmesser der Innenverzahnung 16 und der Außenverzahnung 24 von Innenzahnrad 14 und Stirnzahnrad 22 angepaßt. Dabei weist der Gelenkteil 11 eine solche die Schwenkachse 12 umfassende Bohrung 32 auf, daß einerseits die Schwenkachse 12 ungehindert drehbar ist und andererseits die Exzenterbewegung des Gelenkteiles 10 nicht behindert wird. Um die Schwenkachse 12 verstellen zu können, weist diese einen aus dem zentrischen Abschnitt 20 austretenden, mit Abflachungen versehenen Mitnehmeransatz 33 auf, mit welchem in bekannter Weise die Mitnehmerscheibe 34 eines Stellknopfes 35 verbunden sein mag. Wenn nun die Schwenkachse 12 des aus Fig.2 ersichtlichen Drehgelenkes verdreht wird, so dreht sich der in der Bördelhülse 26 der Topfscheibe 22 gelagerte Exzenterabschnitt 27, so daß die zentrischen Abschnitte 20 und 31 der Schwenkachse sich exzentrisch um den Exzenterabschnitt 27 bewegen. Damit wird auch über die Topfscheibe 14 die Eingriffsstelle ihrer Innenverzahnung 16 auf der Außenverzahnung 24 derart weiterverdreht, daß bei einer Umdrehung der Schwenkachse 12 die Eingriffsstelle zwischen den Verzahnungen 16 und 24 einmal umgelaufen ist, so daß aufgrund der unterschiedlichen Zähnezahl zwischen den beiden Verzahnungen 16 und 24 der mit der Topfscheibe 14 verbundene Gelenkteil 10 gegenüber dem Gelenkteil 11 um die der unterschiedlichen Zähnezahl entsprechende Zahnteilung weiter geschwenkt ist.

Das aus Fig.3 ersichtliche Ausführungsbeispiel eines Drehgelenkes entspricht im wesentlichen dem aus Fig. 2 ersichtlichen Drehgelenk. Im Unterschied dazu ist jedoch die die Innenverzahnung 16 aufweisende und das Innenzahnrad bildende Topfscheibe 14 auf dem Exzenterabschnitt 27 der Schwenkachse 12 gelagert, während der mit der ein Stirnzahnrad bildenden Topfscheibe 22 verbundene Gelenkteil 11 auf dem zentrischen Abschnitt 20 der Schwenkachse 12 gelagert ist. Infolge der exzentrischen Bewegung des Exzenterabschnittes 27 um die zentrischen Abschnitte 20 und 31 bei Drehung der Schwenkachse 12 bewegt sich wiederum die die Innenverzahnung 16 aufweisende Topfscheibe 14 um die das Stirnzahnrad bildende Topfscheibe 22 herum, so daß sich für den Gelenkteil 10 des Ausführungsbeispieles gemäß Fig.3 die gleiche Stellbewegung ergibt, wie für den aus Fig. 2 ersichtlichen Gelenkteil 10. Ein weiterer Unterschied des Drehgelenkes gemäß Fig.3 gegenüber dem aus Fig. 2 ersichtlichen Drehgelenk besteht darin, daß nicht nur der Gelenkteil 10 mit einem Kragenzug 13 den die Verzahnung 16 aufweisenden Umfang der Topfscheibe 14 umfaßt, sondern auch der Gelenkteil 11 ist mit einem die Topfscheibe 22 an ihrem Innenumfang umfassenden Kragenzug 36 versehen.

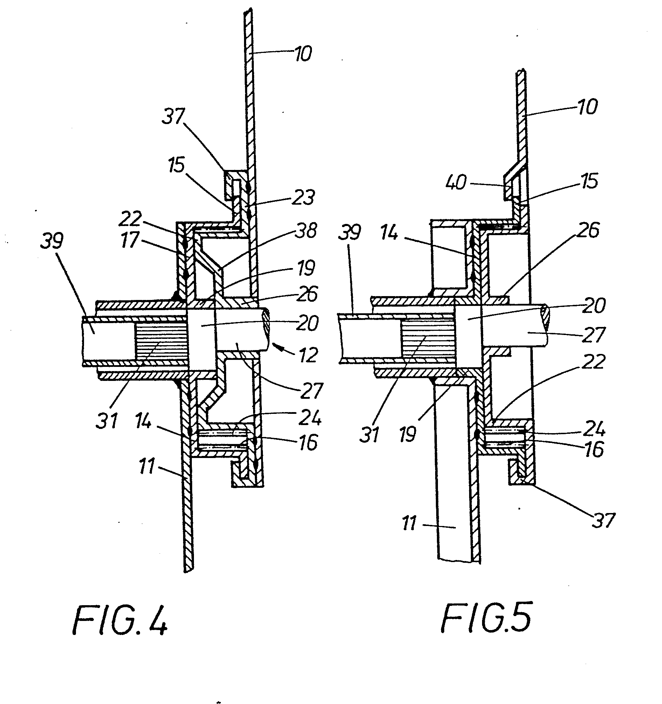

Bei dem aus Fig.4 ersichtlichen Drehgelenk ist im Gegensatz zu den beiden aus den Fig.2 und 3 ersichtlichen Ausführungsbeispielen die das Innenzahnrad darstellende Topfscheibe 14 mit dem dem Sitzteil zugeordneten, feststehenden Gelenkteil 11 fest verbunden. Demgemäß ist die das Stirnzahnrad darstellende Topfscheibe 22 mit dem der Rückenlehne zugeordneten Gelenkteil 10 fest verbunden. Dabei ist die Bördelhülse 19 der Topfscheibe 14 auf dem zentrischen Abschnitt 20 der Schwenkachse 12 drehbar gelagert, während die Bördelhülse 26 der das Stirnzahnrad bildenden Topfscheibe 22 den Exzenterabschnitt 27 der Schwenkachse 12 drehbar umfaßt. Der mit dem Gelenkteil 10 verschweißte Kragen 23 der Topfscheibe 22 ist außenseitig zu einem Klauenring 37 geformt, in welchem der Kragen 15 der Topfscheibe 14 derart geführt ist, daß eine exzentrische Drehbewegung zwischen dem Gelenkteil 10 und 11 bei Sicherung des axialen Zusammenhaltes der Drehgelenkteile möglich ist. Im Gegensatz zu den Ausführungsbeispielen nach den Fig. 2 und 3 ist die Topfscheibe 14 über ihren Boden 17 mit dem Gelenkteil 11 verschweißt. Außerdem weist im Unterschied zum aus Fig.2 ersichtlichen Drehgelenk das aus Fig. 4 ersichtliche Ausführungsbeispiel im Boden der Topfscheibe 22 eine Auswölbung 38 auf, die eine Lagerlängenaufteilung der Bördelhülsen 19 und 26 der Topfscheiben 14 und 22 ermöglicht. Außerdem mag der zentrische Abschnitt 31 zur Drehmitnahme eines Übertragungsrohres 39 hergerichtet sein, um die in die Schwenkachse 12 eingeleitete Drehbewegung auf das Drehgelenk der gegenüberliegenden Sitzlängsseite zu übertragen. Bei einer in die Schwenkachse 12 eingeleiteten Drehbewegung dreht sich der zentrische Abschnitt 20 in der Bördelhülse 19 der das Innenzahnrad bildenden Topfscheibe 14, die mit dem festen Gelenkteil 11 verbunden ist. Da der sich um den zentrischen Abschnitt 20 auf einer Exzenterbahn bewegende Exzenterabschnitt 27, die ein Stirnrad bildende Topfscheibe 22 trägt, läuft auch die Eingriffsstelle zwischen den Verzahnungen 16 und 24 bei einer Umdrehung der Schwenkachse einmal im Innenzahnrad um. Dabei tritt wieder eine Relativbewegung des Gelenkteiles 10 gegenüber dem Gelenkteil 11 auf, die bei einer Umdrehung der Schwenkachse 12 so groß ist, daß der Stellwinkel dem aus der Zähnezahldifferenz resultierenden Zahnteilungswinkel entspricht.

Das aus Fig.5 ersichtliche Ausführungsbeispiel entspricht im wesentlichen dem aus Fig.4 ersichtlichen Drehgelenk. Im Unterschied dazu ist jedoch die das Stirnzahnrad bildende Topfscheibe 22 einstückig aus dem Gelenkteil 10 ausgepreßt. Dabei ist der insbesondere den axialen Zusammenhalt bewirkende Klauenring 37 nur im unteren Bereich des eine halbkreisförmige Kontur aufweisenden Gelenkteiles 10 möglich, während aus dem oberen Gelenkaugenbereich des Gelenkteiles 10 eine fingerförmige Führungslasche 40 ausgedrückt ist, in welche genau wie in die untere Klauenringhälfte der Kragen 15 der das Innenzahnrad bildenden Topfscheibe 14 eingreift. Die Bewegungsverhältnisse des aus Fig.5 ersichtlichen Drehgelenkes entsprechen demjenigen des aus Fig.4 ersichtlichen Ausführungsbeispieles.

Wie bereits erwähnt, geben die dargestellten Ausführungen die Erfindung lediglich beispielsweise wieder und sind keinesfalls allein darauf beschränkt. Es sind vielmehr noch mancherlei andere Ausführungen und Ausgestaltungen der Erfindung möglich.

Ansprüche:

1.) Drehgelenk, insbesondere für Sitze mit verstellbarer Rückenlehne, bei dem zwei gegeneinander bewegbare Gelenkteile über eine Schwenkachse miteinander verbunden sind und wenigstens eines der Gelenkteile in den Seitenholm eines Rückenlehnenrahmens bzw. eines Sitzteilrahmens integriert ist, wobei eine die Lage beider Gelenkteile zueinander bestimmende, als Getriebe mit wenigstens einem Innenzahnrad und wenigstens einem damit kämmenden Stirnzahnrad ausgebildete Ver- und Feststelleinrichtung vorgesehen ist, die einen auf der Schwenkachse angeordneten, drehbaren Exzenter aufweist, d a d u r c h   g e k e n n z e i c h n e t , daß sowohl das Stirnzahnrad als auch das Innenzahnrad als mit den Gelenkteilen (10,11) drehfest verbundene Topfscheiben (14,22) ausgebildet sind, wobei die das Stirnrad bildende Topfscheibe (22) an ihrem Außenmantel die Verzahnung (24) und die das Innenzahnrad bildende Topfscheibe (14) an ihrem Innenmantel die Verzahnung (16) aufweist.

2.) Drehgelenk nach Anspruch 1, dadurch gekennzeichnet, daß die sowohl das Stirnzahnrad (22) als auch das Innenzahnrad (14) bildenden Topfscheiben an ihrem Umfang von Kragenzügen (13,36) der Gelenkteile (10, 11) umfaßt sind und die Böden (17,25) der Topfscheiben durch eingesetzte Scheiben (21,28) verstärkt sind.

3.) Drehgelenk nach Anspruch 1 oder 2, dadurch gekennzeichnet, daß wenigstens eine der beiden Topfscheiben (14,22) einstückig an einen der beiden Gelenkteile (10,11) angeformt ist.

4.) Drehgelenk nach einem oder mehreren der vorhergehenden Ansprüche, dadurch gekennzeichnet, daß die Topfscheiben (14,22) mit zu ihren Verzahnungen (16, 24) zentrisch angeformten Bördelhülsen (19,26) auf den zugehörigen Schwenkachsenabschnitten (20,27) abgestützt sind.

5.) Drehgelenk nach einem oder mehreren der vorhergehenden Ansprüche, dadurch gekennzeichnet, daß die Böden (17,25) der Topfscheiben (14,22) ausgepreßte, die Lagerflächen für die Bördelhülsen verlängerte Auswölbungen (18,38) aufweisen.

Bezugszeichenliste

| 10 | Gelenkteil | 31 | Abschnitt, zentrisch von 12 |
|---|---|---|---|
| 11 | Gelenkteil | 32 | Bohrung in 11 |
| 12 | Schwenkachse | 33 | Mitnehmeransatz |
| 13 | Kragenzug | 34 | Mitnehmerscheibe |
| 14 | Topfscheibe / Innenzahnrad | 35 | Stellknopf |
| 15 | Kragen | 36 | Kragenzug |
| 16 | Innenverzahnung | 37 | Klauenring |
| 17 | Boden von 14 | 38 | Auswölbung |
| 18 | Auswölbung an 17 | 39 | Übertragungsrohr |
| 19 | Bördelhülse an 14 | 40 | Führungslasche |
| 20 | Abschnitt, zentrisch von 12 | | |
| 21 | Verstärkungsscheibe | | |
| 22 | Topfscheibe Stirnzahnrad | | |
| 23 | Kragen an 22 | | |
| 24 | Außenverzahnung | | |
| 25 | Boden von 22 | | |
| 26 | Bördelhülse an 22 | | |
| 27 | Exzenterabschnitt | | |
| 28 | Verstärkungsscheibe | | |
| 29 | Lagerschild | | |
| 30 | Niet | | |

FIG.1

0071011

1/3

Keiper

0071011

2/3

FIG.3

FIG.2

Keiper

FIG.4

FIG.5

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | B 60 N 1/06 |
| A | DE-A-2 924 582 (ROLTRA) <br> * das ganze Dokument * | 1 | |
| | --- | | |
| A | GB-A-1 080 999 (RECARO) <br> * das ganze Dokument * | 1 | |
| | --- | | |
| A | DE-B-1 034 990 (STUTTGARTER KAROSSERIEWERK) | | |
| | --- | | |
| A | FR-A-1 590 551 (RECARO) | | |
| | --- | | |
| A | DE-A-2 041 302 (KEIPER) | | |
| | --- | | RECHERCHIERTE SACHGEBIETE (Int. Cl. ³) |
| A | FR-A-2 143 887 (BORG-WARNER CO.) | | |
| | --- | | B 60 N 1/06 <br> F 16 H 55/00 |
| A | EP-A-0 006 137 (EX-CELL-O. CO: | | F 16 H 55/02 <br> B 21 D 53/28 |
| | --- | | |
| A | FR-A-2 282 303 (SIEGWART) | | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 17-08-1982 | CORMACI R.C. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82